# EUROPÄISCHE PATENTSCHRIFT

(11) **EP 4 017 910 B1**
(45) Veröffentlichungstag und Bekanntmachung des Hinweises auf die Patenterteilung: **27.11.2024**
(21) Anmeldenummer: 20751080.1
(22) Anmeldetag: 24.07.2020
(51) Int. Cl.: C08K 3/04, C08K 5/16

(54) **KAUTSCHUKMISCHUNG UND ELASTOMERER ARTIKEL ENTHALTEND DIE KAUTSCHUKMISCHUNG**
RUBBER MIXTURE AND ELASTOMERIC ARTICLE CONTAINING THE RUBBER MIXTURE
MÉLANGE DE CAOUTCHOUC ET ARTICLE ÉLASTOMÈRE CONTENANT LE MÉLANGE DE CAOUTCHOUC

(30) Priorität: 21.08.2019 DE 102019212465
(43) Veröffentlichungstag der Anmeldung: 29.06.2022
(73) Patentinhaber: ContiTech Deutschland GmbH, 30175 Hannover (DE)
(72) Erfinder: KOO, Juny, 30419 Hannover (DE)
(74) Vertreter: Continental Corporation
(86) Internationale Anmeldenummer: PCT/EP2020/070937
(87) Internationale Veröffentlichungsnummer: WO 2021/032404

(56) Entgegenhaltungen:
- DATABASE WPI Week 201455, Derwent World Patents Index; AN 2014-M99586, XP002800352
- DATABASE WPI Week 201468, Derwent World Patents Index; AN 2014-S18929, XP002800353
- DATABASE WPI Week 200276, Derwent World Patents Index; AN 2002-703059, XP002800354

## Beschreibung

Die Erfindung betrifft einen elastomeren Artikel, der wenigstens einen Festigkeitsträger und eine Kautschukmischung enthält. Der elastomere Artikel ist bevorzugt ein Antriebsriemen, ein Schlauch, Luftfederbalg, ein Metall-Gummi-Element, ein Schwingungsdämpfer, ein Transportband, ein Fördergurt, eine mehrschichtige Stoffbahn zur Bildung von flexiblen Behältern, Zelten, Planen, Membranen, Schutzanzügen, Drucktüchern, Faltenbälgen und dergleichen oder ein Reifen.

Durch die Kombination mehrerer vorteilhafter Eigenschaften wie Ölbeständigkeit, Witterungsbeständigkeit, Wärme- und Ozonbeständigkeit, Flammwidrigkeit sowie wegen seiner guten mechanischen Eigenschaften, findet bei vielen dieser elastomeren Artikel häufig Chloroprenkautschuk (CR) Verwendung.

Bei Kautschukmischungen, die überwiegend auf Chloroprenkautschuk (CR) basieren, existieren allerdings häufig Schwierigkeiten durch schnelles Anvulkanisieren (Scorchverhalten) während der Verarbeitungszeit der Mischungen, kurze Haltbarkeit der Mischungen durch fortschreitende Vulkanisation auch bei Raumtemperatur und dadurch bedingt hohe Transportkosten durch den notwendigen Kühltransport.

Flammgeschützte und / oder Chloroprenkautschuk enthaltende Artikel, allerdings sind bspw unter anderem aus CN20141020921, KR20140115090 oder JP2002257199 bekannt.

Eine Aufgabe der vorliegenden Erfindung ist es daher, einen elastomeren Artikel enthaltend wenigstens einen Festigkeitsträger und eine Kautschukmischung bereitzustellen, welche die oben genannten Probleme löst und sich somit durch eine verbesserte Verarbeitungssicherheit, längere Haltbarkeit und geringere Transportkosten auszeichnet.

Gelöst wird diese Aufgabe dadurch, dass die Kautschukmischung für den elastomeren Artikel folgenden Bestandteile enthält:
- 51 bis 100 phr wenigstens eines Chloroprenkautschuks und
- 0 bis 49 phr wenigstens eines weiteren Kautschuks, der kein Chloroprenkautschuk ist, und
- 2 bis 15 phr wenigstens eines Peroxids als Vernetzungsmittel und
- 0 phr Zinkoxid und
- weitere Mischungsbestandteile.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Vulkanisation von Chloroprenkautschuk erfolgt unter Verwendung von Metalloxiden, insbesondere unter Verwendung von MgO und vor allem von ZnO, siehe beispielsweise Kapitel 2.9.4.5. im Handbuch "Kautschuktechnologie" von Röthemeyer/Sommer, 3. Auflage (2013). Darüber hinaus wird aufgrund bereits eingangs erwähnter Schwierigkeiten die Auswahl von Beschleunigern durch andere Parameter geregelt. Die meisten herkömmlich verwendeten Beschleuniger sind problematisch, wenn CR-Kautschuke gehärtet werden. Als wichtigster Beschleuniger wird dafür Ethylenthioharnstoff (ETU) eingesetzt. Diese Substanz ist zwar ein hervorragender und bewährter Katalysator für CR-Kautschuk, aber sie ist als fortpflanzungsgefährdend eingestuft, so dass derzeit nach gleichwertigen Alternativen für ETU gesucht wird.

Überraschenderweise wurde gefunden, dass sich insbesondere das Scorchverhalten optimieren lässt, wenn eine Kautschukmischung, welche wenigstens 51 phr Chloroprenkautschuk enthält, mittels 2 bis 15 phr Peroxid vernetzt wird.

Die Kautschukmischung ist dabei frei von Zinkoxid, d.h. die Gesamtmenge an Zinkoxid beträgt 0 phr.

Weiterhin kann auf das Vorhandensein von weiteren Vulkanisationsbeschleunigern, wie sie bspw. aus der klassischen Schwefelvulkanisation bekannt sind, verzichtet werden. In einer vorteilhaften Ausgestaltung beträgt daher die Gesamtmenge an Vulkanisationsbeschleunigern für die Schwefelvulkanisation in der Kautschukmischung ebenso 0 phr.

In einer bevorzugten Ausführungsform kann die Kautschukmischung noch 1 bis 5 phr, bevorzugt 3 bis 5 phr, Magnesiumoxid enthalten.

Erfindungsgemäß enthält die Kautschukmischung als Polymerkomponente 51 bis 100 phr, bevorzugt 80 bis 100 phr, besonders bevorzugt 90 bis 100 phr wenigstens eines Chloroprenkautschuks.

In einer bevorzugten Ausführungsform enthält die erfindungsgemäße Kautschukmischung 100 phr wenigstens eines Chloroprenkautschuks und enthält somit als einzige Kautschukkomponente CR-Kautschuk.

Die Kautschukmischung enthält bevorzugt 0 bis 49 phr, besonders bevorzugt 0 bis 20 phr, ganz besonders bevorzugt 0 bis 10 phr wenigstens einer weiteren Kautschukkomponente, die kein Chloroprenkautschuk ist und die bevorzugt ausgewählt ist aus der Gruppe, bestehend aus Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder alkyliertes chlorsulfoniertes Polyethylen (ACSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Polyurethan (PU).

Die genannten Kautschuke können hierbei allein oder im Verschnitt eingesetzt werden.

In einer bevorzugten Ausführungsform ist die Kautschukmischung allerdings frei von weiteren Kautschukkomponenten, d.h. die Gesamtmenge aller weiteren Kautschukkomponenten beträgt 0 phr.

Die Kautschukmischung enthält erfindungsgemäß wenigstens ein Peroxid in Mengen von 2 bis 15 phr, bevorzugt in Mengen von 4 bis 12 phr, besonders bevorzugt in Mengen von 6 bis 8 phr. Als Peroxide können alle der fachkundigen Person bekannten Peroxide, insbesondere allerdings organische Peroxide, wie beispielsweise Benzoylperoxid, Di-t-butylperoxid, Dicumylperoxid oder Bis-(t-butylperoxy)-diisopropylbenzol, alleine oder in Kombination verwendet werden.

Zusätzlich kann vorteilhafterweise in der Kautschukmischung wenigstens noch ein Co-Agenz für die peroxidische Vernetzung vorhanden sein. Co-Agentien sind in der Regel radikalübertragende Substanzen, welche die Effizienz der peroxidischen Vernetzung wesentlich verbessern.

Das Co-Agenz wird bevorzugt alleine oder in Kombination in einer Gesamtmenge von 0,5 bis 8 phr eingesetzt.

Es können alle der fachkundigen Person bekannten Co-Agentien alleine oder in Kombination verwendet werden.

Das Co-Agenz ist in einer bevorzugten Ausführungsform ausgewählt aus der Gruppe, bestehend aus Trimethylolpropanoltrimethacyrlat (TMPTMA) und / oder Trimethylolpropantrimethacrylat (TRIM) und / oder Triallylcyanurat (TAC) und / oder Triallylisocyanurat (TAIC) und / oder Ethylenglycoldimethacrylat (EDMA) und / oder Diallylterephthalat (DATP) und / oder 1,4-Butandiolacrylat (BDDA) und / oder N,N'-m-Phenylenbismaleimid (MPBM) und / oder Bis(methacrylat)poly(ethlenglycole), wie bpsw. EDMA, DEDMA, TriEDMA oder TetraEDMA, und / oder Bis(allyl)poly(ethylenglocole), wie bspw. AEGA, ADEGA, ATriEGA oder ATetraEGA, und / oder Bis(allyl)alkandiole, wie bpsw. AEGA, ABUGA, AHDA, AODA oder ADGA, und / oder Bis(allyl)alkandithiole, wie bspw. AHTA oder ANTA, und / oder Bis(ethoxyallyl)disulfide (BEADS) und / oder 1-Allyloxyoctan (AOD) und / oder Triethylenglycolmono(metzhyl)mono(allyl)ether (ATriEGM).

Erfindungsgemäß enthält die Kautschukmischung noch weitere Mischungsbestandteile. Weitere Mischungsbestandteile im Rahmen der vorliegenden Erfindung können sein: Füllstoffe, wie bspw. Kieselsäure oder Ruß, Alterungsschutzmittel, Weichmacher, Wachs oder Harz.

Der elastomere Artikel enthält erfindungsgemäß wenigstens einen Festigkeitsträger.

Dieser Festigkeitsträger liegt zumeist als einlagige oder mehrlagige Festigkeitsträgerschicht vor und kann je nach Endprodukt als Filz, Vlies, Gewebe, Geflecht, Gewirk oder Gestrick, Gelege ausgebildet sein. Es ist auch möglich, dass die Festigkeitsträgerschicht aus Komponenten aus Filz, Vlies, Gewebe, Geflecht, Gewirk oder Gestrick, Gelege ausgebildet ist.

Als Materialien für die Festigkeitsträgerschicht können alle der fachkundigen bekannten und geeigneten Materialien verwendet werden, die bevorzugt ausgewählt sind aus der Gruppe, bestehend aus: Polyamid (PA), z.B. PA6, PA6.6, PA11, PA12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Baumwolle und / oder Zellwolle und / oder Polyvinylalkohol (PVAL) und / oder Polyoxibenzonaphtoat und / oder Polyvinylacetal (PVA) und / oder Polyketon (POK) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas und / oder Basalt und / oder Metall und / oder Carbon und / oder Keramik und / oder Kohlenstoff und / oder Wolle und / oder Baumwolle und / oder Polypropylen und / oder Melamin und / oder modifizierte Viskose und / oder Gestein und / oder hochkristalline Polymerfasern und / oder Fluorpolymere, wie bspw. Fluorsilikon, Polytetrafluorethylen (PTFE) und Perfluorethylenpropylen (FEP), und /oder Fluor-Copolymere, wie bspw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE).

Die Materialien für die Festigkeitsträgerschicht können hierbei alleine oder in Kombination verwendet werden, d.h. es sind auch so genannte Hybridsysteme möglich. Als Hybridsysteme sind z. B. Kombinationen aus Polyester (PES) oder Polyamid (PA) mit Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas besonders gut geeignet.

Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas zeichnen sich durch eine hohe Temperaturbeständigkeit (und Chemikalienbeständigkeit) aus und verbessern dadurch die Brandeigenschaften des Gewebes. Die Kombination mit Polyester (PES) oder Polyamid (PA) macht das Hybridsysteme kostengünstig und reduziert negative Eigenschaften wie z. B. die reduzierte Reißdehnung der hochtemperaturbeständigen Fasern.

Der elastomere Artikel ist bevorzugt ein Antriebsriemen, ein Schlauch, Luftfederbalg, ein Metall-Gummi-Element, ein Schwingungsdämpfer, ein Transportband, ein Fördergurt, eine mehrschichtige Stoffbahn zur Bildung von flexiblen Behältern, Zelten, Planen, Membranen, Schutzanzügen, Drucktüchern, Faltenbälgen und dergleichen oder ein Reifen.

Die Erfindung soll nun anhand von Vergleichs- und Ausführungsbeispielen, die in der Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

In der aus Gründen der Lesbarkeit in zwei Teile aufgeteilten Tabelle 1 wird Peroxid als Vernetzungsreagenz in den erfindungsgemäßen Versuchen E1 bis E8 statt Zinkoxid (V1) verwendet. Zu erkennen ist in E1 bis E8 eine Erhöhung des t10-Wertes, vor allem aber des t40-Wertes zu erkennen. Aufgrund dieses verbesserten Scorchverhaltens resultiert eine erhöhte Verarbeitungssicherheit und eine längere Haltbarkeit. Weiterhin ist zu erkennen, dass die Viskositäten der mit Peroxid versehenen Mischungen deutlich langsamer verhärten als diejenigen mit ZnO (siehe die Hochdruck-kapillarviskositätswerte). Dieses Verhalten lässt auf eine längere Haltbarkeit der Mischungen, vor allem im Sommer, schließen.

Den vorliegenden Daten nach zu urteilen stellt eine Zugabemenge von 6 bis 8 phr eine optimale Dosierung dar, da die Zugermüdungs- und Shorehärtewerte nicht zu stark beeinträchtigt sind und für die Elastizitätsmoduln bei 50%, 100% bzw. 200% Dehnung größere Werte vorliegen als bei der Vergleichsprobe V1.

**Tabelle 1**

| | **V1** | **E1** | **E2** | **E3** | **E4** |
|---|---|---|---|---|---|
| ZnO [phr] | 4 | 0 | 0 | 0 | 0 |
| Peroxid [phr] | 0 | 4 | 5 | 6 | 7 |
| Chloroprenkautschuk [phr] | 100 | 100 | 100 | 100 | 100 |
| Säureakzeptor (MgO) [phr] | 4 | 4 | 4 | 4 | 4 |
| Zinkoxid [phr] | 4 | 0 | 0 | 0 | 0 |
| Stearinsäure, Antioxidans, Adhäsionsmittel, Weichmacher [phr] | 21 | 21 | 21 | 21 | 21 |
| Ruß [phr] | 60 | 60 | 60 | 60 | 60 |
| Schwefel mit Öl [phr] | 0,2 | 0 | 0 | 0 | 0 |
| Vernetzungshilfsmittel (TMPTMA) [phr] | 6 | 6 | 6 | 6 | 6 |

| **Rheometerprüfung 20min@180°C gemäß DIN 53 529** | | | | | |
|---|---|---|---|---|---|
| Fmin / dNm | 1,25 | 1,26 | 0,81 | 1,25 | 1,05 |
| Fmax/ dNm | 18,89 | 15,59 | 15,38 | 16,83 | 17,11 |
| t10 / s | 0,7 | 1,05 | 1,1 | 1,04 | 1,03 |
| t40/s | 1,06 | 1,79 | 2,01 | 1,9 | 2,06 |
| t90/s | 12,43 | 8,33 | 8,94 | 7,7 | 7,87 |

| **Härte bei RT gemäß DIN ISO 7619-1** | | | | | |
|---|---|---|---|---|---|
| Shore A | 78 | 74 | 74 | 74 | 77 |

| **Zugfestigkeit und Reißdehnung (längs) gemäß DIN 53 504** | | | | | |
|---|---|---|---|---|---|
| Modul 50% / MPa | 3,1 | 2,8 | 2,6 | 2,9 | 3,1 |
| Modul 100% / MPa | 5,3 | 5,1 | 4,9 | 5,3 | 5,6 |
| Modul 200% / MPa | 10,5 | 10,8 | 10,9 | 11,4 | 11,3 |
| Fmax/ MPa | 18,8 | 15,6 | 15,5 | 15,8 | 16,2 |
| Reißdehnung / % | 392,1 | 296,6 | 290,5 | 287,7 | 292,6 |

| **Zugfestigkeit und Reißdehnung (quer) gemäß DIN 53 504** | | | | | |
|---|---|---|---|---|---|
| Modul 50% / MPa | 2,9 | 2,5 | 2,4 | 2,6 | 3 |
| Modul 100% / MPa | 5 | 4,4 | 4,3 | 4,7 | 5,2 |
| Modul 200% / MPa | 10,4 | 9,9 | 9,7 | 10,3 | 11,1 |
| Fmax/ MPa | 17,8 | 14,3 | 14,6 | 14,2 | 15,1 |
| Reißdehnung/% | 378,1 | 287,9 | 297,3 | 14,2 | 277,1 |

| **Lagerung bei 20°C / Tag (HKV @ 80°C / Pas (ISO 11443:2014))*** | | | | | |
|---|---|---|---|---|---|
| 1 Tag | 1940 | 1753 | 1276 | 1788 | 1673 |
| 13 Tage | 2190 | | | | 1772 |
| 15 Tage | 2051 | | | | 1537 |
| 19 Tage | 2320 | | | | 1875 |

| **Lagerung bei 30°C / Tag (HKV @ 80°C / Pas (ISO 11443:2014))*** | | | | | |
|---|---|---|---|---|---|
| 1 Tag | 1940 | 1753 | 1276 | 1788 | 1673 |
| 13 Tage | 4447 | | | | 2335 |
| 15 Tage | 4614 | | | | 2346 |
| 19 Tage | 6070 | | | | 2558 |

| | **V1** | **E5** | **E6** | **E7** | **E8** |
|---|---|---|---|---|---|
| ZnO [phr] | 4 | 0 | 0 | 0 | 0 |
| Peroxid [phr] | 0 | 8 | 9 | 10 | 11 |
| Chloroprenkautschuk [phr] | 100 | 100 | 100 | 100 | 100 |
| Säureakzeptor (MgO) [phr] | 4 | 4 | 4 | 4 | 4 |
| Zinkoxid [phr] | 4 | 0 | 0 | 0 | 0 |
| Stearinsäure, Antioxidans, Adhäsionsmittel, Weichmacher [phr] | 21 | 21 | 21 | 21 | 21 |
| Ruß [phr] | 60 | 60 | 60 | 60 | 60 |
| Schwefel mit Öl [phr] | 0,2 | 0 | 0 | 0 | 0 |
| Vernetzungshilfsmittel (TMPTMA) [phr] | 6 | 6 | 6 | 6 | 6 |

| **Rheometerprüfung 20min@180°C gemäß DIN 53 529** | | | | | |
|---|---|---|---|---|---|
| Fmin / dNm | 1,25 | 1,14 | 0,96 | 0,88 | 1 |
| Fmax / dNm | 18,89 | 18,18 | 18,96 | 19,98 | 20,96 |
| t10 / s | 0,7 | 1,04 | 1 | 1,02 | 0,96 |
| t40 / s | 1,06 | 2,13 | 2,14 | 2,25 | 2,21 |
| t90 / s | 12,43 | 7,1 | 6,64 | 6,98 | 6,65 |

| **Härte bei RT gemäß DIN ISO 7619-1** | | | | | |
|---|---|---|---|---|---|
| Shore A | 78 | 76 | 77 | 78 | 78 |

| **Zugfestigkeit und Reißdehnung (längs) gemäß DIN 53 504** | | | | | |
|---|---|---|---|---|---|
| Modul 50% / MPa | 3,1 | 3 | 3,2 | 3,5 | 3,5 |
| Modul 100% / MPa | 5,3 | 5,5 | 5,7 | 6,6 | 6,6 |
| Modul 200% / MPa | 10,5 | 11,7 | 12,4 | 13,6 | 13,7 |
| Fmax / MPa | 18,8 | 16,3 | 16,4 | 16,1 | 15,3 |
| Reißdehnung / % | 392,1 | 302 | 283 | 249,6 | 232,9 |

| **Zugfestigkeit und Reißdehnung (quer) gemäß DIN 53 504** | | | | | |
|---|---|---|---|---|---|
| Modul 50% / MPa | 2,9 | 2,8 | 3,1 | 3,1 | 3,1 |
| Modul 100% / MPa | 5 | 4,9 | 5,5 | 5,6 | 5,4 |
| Modul 200% / MPa | 10,4 | 10,4 | 11,6 | 12,1 | 11,9 |
| Fmax / MPa | 17,8 | 15 | 14,8 | 15 | 15 |
| Reißdehnung / % | 378,1 | 299,3 | 267,9 | 258,4 | 259 |

| **Lagerung bei 20°C / Tag (HKV @ 80°C / Pas (ISO 11443:2014))*** | | | | | |
|---|---|---|---|---|---|
| 1 Tag | 1940 | | | | 1637 |
| 13 Tage | 2190 | | | | 1772 |
| 15 Tage | 2051 | | | | 1637 |
| 19 Tage | 2320 | | | | 1724 |

| **Lagerung bei 30°C / Tag (HKV @ 80°C / Pas (ISO 11443:2014))*** | | | | | |
|---|---|---|---|---|---|
| 1 Tag | 1940 | | | | 1637 |
| 13 Tage | 4447 | | | | 2198 |
| 15 Tage | 4614 | | | | 2249 |
| 19 Tage | 6070 | | | | 2426 |

| | | | | | |
|---|---|---|---|---|---|
| *Es wurden Viskositätsmessungen von Mischungen durchgeführt, welche bei 20°C bzw. bei 30 °C jeweils bis zu 19 Tagen gelagert wurden. Zwischendurch wurden Hochdruckkapillarviskositätswerte (HKV) bei 80°C gemessen. | | | | | |

## Patentansprüche

1. Elastomerer Artikel enthaltend wenigstens einen Festigkeitsträger und eine Kautschukmischung, **dadurch gekennzeichnet, dass** die Kautschukmischung folgende Bestandteile enthält:
- 51 bis 100 phr wenigstens eines Chloroprenkautschuks und
- 0 bis 49 phr wenigstens eines weiteren Kautschuks, der kein Chloroprenkautschuk ist, und
- 2 bis 15 phr wenigstens eines Peroxids als Vernetzungsmittel und
- 0 phr Zinkoxid und
- weitere Mischungsbestandteile.

2. Elastomerer Artikel nach Anspruch 1, **dadurch gekennzeichnet, dass** die Kautschukmischung 100 phr Chloroprenkautschuk enthält.

3. Elastomerer Artikel nach Anspruch 1 oder 2, **dadurch gekennzeichnet, dass** die Kautschukmischung 6 bis 8 phr wenigstens eines Peroxids als Vernetzungsmittel enthält.

4. Elastomerer Artikel nach einem der Ansprüche 1 bis 3, **dadurch gekennzeichnet, dass** die Kautschukmischung frei von Vulkanisationsbeschleunigern für die Schwefelvulkanisation ist, d.h. dass die Gesamtmenge an Vulkanisationsbeschleunigern für die Schwefelvulkanisation 0 phr beträgt.

5. Elastomerer Artikel nach einem der Ansprüche 1 bis 4, **dadurch gekennzeichnet, dass** es sich um einen Antriebsriemen, einen Schlauch, einen Luftfederbalg, ein Metall-Gummi-Element, einen Schwingungsdämpfer, ein Transportband, einen Fördergurt, eine mehrschichtige Stoffbahn zur Bildung von flexiblen Behältern, Zelten, Planen, Membranen, Schutzanzügen, Drucktüchern, Faltenbälgen und dergleichen oder einen Reifen handelt.

## Claims

1. Elastomeric article containing at least one strength member and a rubber mixture, **characterized in that** the rubber mixture contains the following constituents:
- 51 to 100 phr of at least one chloroprene rubber and
- 0 to 49 phr of at least one further rubber which is not a chloroprene rubber and
- 2 to 15 phr of at least one peroxide as a crosslinking agent and
- 0 phr of zinc oxide and
- further mixture constituents.

2. Elastomeric article according to Claim 1, **characterized in that** the rubber mixture contains 100 phr of chloroprene rubber.

3. Elastomeric article according to Claim 1 or 2, **characterized in that** the rubber mixture contains 6 to 8 phr of at least one peroxide as a crosslinking agent.

4. Elastomeric article according to any of Claims 1 to 3, **characterized in that** the rubber mixture is free from vulcanization accelerators for sulfur vulcanization, i.e. **in that** the total amount of vulcanization accelerators for sulfur vulcanization is 0 phr.

5. Elastomeric article according to any of Claims 1 to 4, **characterized in that** it is a drive belt, a hose, an air spring bellows, a metal/rubber element, a vibration damper, a transport band, a conveyor belt, a multi-layered material web for forming flexible containers, tents, tarpaulins, membranes, protective suits, printing blankets, gaiters and the like or a tire.

## Revendications

1. Article élastomère contenant au moins un support de renforcement et un mélange de caoutchouc, **caractérisé en ce que** le mélange de caoutchouc contient les constituants suivants :
- 51 à 100 pcc d'au moins un caoutchouc de chloroprène et
- 0 à 49 pcc d'au moins un autre caoutchouc, qui n'est pas un caoutchouc de chloroprène et
- 2 à 15 pcc d'au moins un peroxyde en tant qu'agent de réticulation et
- 0 pcc d'oxyde de zinc et
- d'autres constituants de mélange.

2. Article élastomère selon la revendication 1, **caractérisé en ce que** le mélange de caoutchouc contient 100 pcc de caoutchouc de chloroprène.

3. Article élastomère selon la revendication 1 ou 2, **caractérisé en ce que** le mélange de caoutchouc contient 6 à 8 pcc d'au moins un peroxyde en tant qu'agent de réticulation.

4. Article élastomère selon l'une des revendications 1 à 3, **caractérisé en ce que** le mélange de caoutchouc est exempt d'accélérateurs de vulcanisation pour la vulcanisation par le soufre, c'est-à-dure que la quantité totale d'accélérateurs de vulcanisation pour la vulcanisation par le soufre est de 0 pcc.

5. Article élastomère selon l'une des revendications 1 à 4, **caractérisé en ce qu'**il s'agit d'une courroie d'entraînement, d'un tuyau, d'un soufflet de suspension pneumatique, d'un élément métal-caoutchouc, d'un amortisseur d'oscillations, d'une bande transporteuse, d'une courroie de transport, d'une bande multicouche destinée à la formation de récipients souples, de tentes, de bâches, de membranes, de vêtements de protection, de blanchets, de soufflets et analogues ou d'un pneu.
